# FASCICULE DE BREVET EUROPEEN

(11) **EP 0 704 945 B1**
(45) Date de publication et mention de la délivrance du brevet: **24.06.1998**
(21) Numéro de dépôt: 95402165.5
(22) Date de dépôt: 27.09.1995
(51) Int. Cl.: H01S 3/06, H01S 3/23

(54) **Amplificateur optique régulé à circulateur optique**
Geregelter optischer Verstärker mit optischem Zirkulator
Controlled optical amplifier with optical circulator

(30) Priorité: 29.09.1994 FR 9411639
(43) Date de publication de la demande: 03.04.1996
(73) Titulaire: ALCATEL ALSTHOM COMPAGNIE GENERALE D'ELECTRICITE, 75008 Paris (FR)
(72) Inventeur: Artigaud, Serge, F-91210 Draveil (FR); Hervo, Jean, F-91210 Draveil (FR); Sansonetti, Pierre, F-91120 Palaiseau (FR)
(74) Mandataire: Fournier, Michel

(56) Documents cités:
- EP-A- 0 395 277
- EP-A- 0 566 236
- US-A- 5 283 686
- PATENT ABSTRACTS OF JAPAN vol. 017 no. 453 (E-1417) ,19 Août 1993 & JP-A-05 102583 (SUMITOMO ELECTRIC IND LTD;OTHERS: 02) 23 Avril 1993,
- IEEE PHOTONICS TECHNOLOGY LETTERS, vol. 6, no. 2, Février 1994 NEW YORK US, pages 202-204, XP 000439750 Y.SATO ET AL. 'Noise figure monitoring of optical amplifiers via backward amplified spontaneous emission'
- ELECTRONICS LETTERS, vol. 30, no. 17, 18 Août 1994 pages 1407-1409, XP 000472066 BAYART D ET AL '1.55 UM FLUORIDE-BASED EDFA WITH GAIN-FLATNESS CONTROL FOR MULTIWAVELENGTH APPLICATIONS'

## Description

La présente invention concerne de façon générale les liaisons à fibres optiques pour la transmission simultanée d'informations dans plusieurs canaux, et en particulier un amplificateur optique régulé comportant un circulateur optique destiné à égaliser le gain pour tous les canaux de la liaison optique concernée.

Dans une liaison par fibres optiques, il est classique d'utiliser un guide amplificateur dont la gain a une même valeur pour tous les canaux composant la liaison ; c'est à dire que le guide amplificateur présente la caractéristique appelée la platitude de gain.

On a donc songé à réguler le guide amplificateur en insérant dans le guide amplificateur un isolateur optique et/ou un filtre. Mais on se heurte à différents problèmes tels que le problème des soudures ou encore la perte intrinsèque de puissance due à l'isolateur optique.

Une autre solution qui fait l'objet de la demande de brevet français 94.00321 déposée par la demanderesse et du document Electronics Letters, vol. 30, no. 17, 18 Août 1994, pages 1407-1409, consiste à insérer un coupleur optique en entrée du guide amplificateur de façon à contrôler le niveau de l'émission de lumière amplifiée à l'aide d'une lumière de régulation constituée par une émission spontanée amplifiée contra-directionnelle se propageant dans un sens opposé au sens direct de la lumière dans la fibre optique. Ce procédé présente néanmoins le problème d'introduire une perte de puissance et surtout, l'asservissement régule la puissance contra-directionnelle qui n'est pas forcément le reflet fidèle de la puissance dans la direction utile.

C'est pourquoi le but principal de l'invention est de réaliser un amplificateur optique ayant une platitude de gain pour tous les canaux d'une liaison optique malgré les variations de puissance de la lumière à amplifier.

L'objet de l'invention est donc un amplificateur optique régulé comprenant un circulateur optique ayant un port d'entrée pour recevoir le signal de lumière à amplifier, un port de sortie pour fournir le signal de lumière amplifiée et deux ports intermédiaires, le premier port intermédiaire étant connecté à un guide amplificateur et le second port intermédiaire étant connecté à un moyen de régulation destiné à contrôler le guide amplificateur.

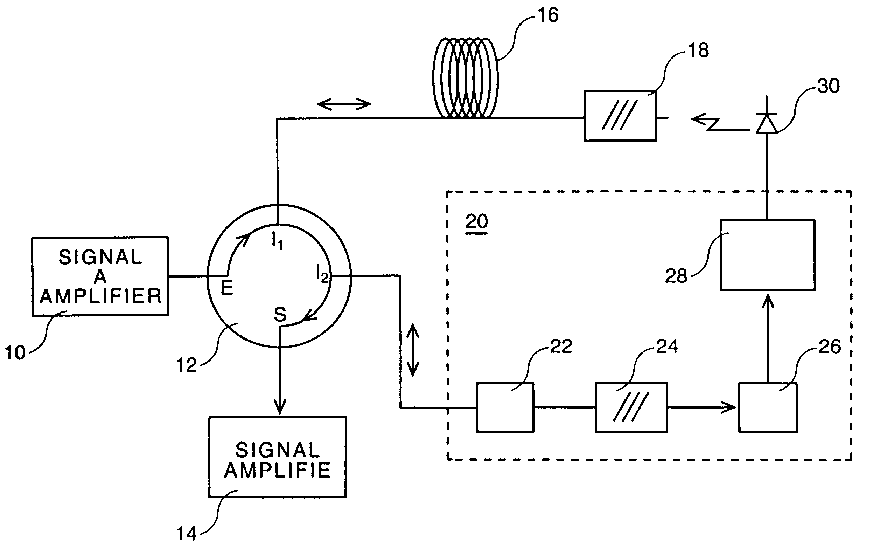

Les buts, objets et caractéristiques de la présente invention seront mieux compris à l'aide de la description suivante faite en référence à la figure unique représentant schématiquement un mode de réalisation préféré de l'invention.

Conformément à la figure unique, un signal de lumière à amplifier 10 en provenance d'un émetteur est composé de plusieurs ondes porteuses de longueurs d'onde différentes. Ainsi, les ondes porteuses peuvent avoir des longueurs d'onde de 2 en 2 nm dans la bande de longueurs d'onde 1550 ±10 nm, ce qui résulte en un signal multiplex de 10 canaux.

Le signal à amplifier est fourni à un circulateur optique par son port d'entrée E. Le signal transmis est amplifié par un guide amplificateur comme on va le voir dans la suite, et on obtient le signal amplifié au port de sortie S du circulateur optique. On doit noter que le circulateur optique bien connu dans la technique des liaisons par fibres optiques ne sera pas décrit dans le cadre de cette invention.

Le circulateur optique comporte deux ports intermédiaires I1 et I2. Au premier port intermédiaire I1, la lumière est dérivée par une fibre optique vers un guide amplificateur 16. Un tel guide amplificateur peut être avantageusement une fibre optique à matrice fluorée dopée à l'erbium. Mais il pourrait être également constitué par une fibre de silice dopée à l'erbium. Lorsqu'il est excité par une onde de pompe, l'élément dopant réalise une amplification du signal lumineux. Le gain de l'amplificateur dépend d'une caractéristique commandée de l'onde de pompe, cette caractéristique commandée étant typiquement la puissance de cette onde.

Le guide amplificateur 16 est suivi d'un réseau photoréfractif 18. Le but du réseau photoréfractif 18 est de réfléchir le signal de lumière amplifiée et de le renvoyer dans la fibre optique vers le circulateur optique 12. Un tel réseau photoréfractif, qui ici réfléchit 100% de la lumière, agit par modification périodique de l'indice de réfraction au coeur de la fibre optique.

Le deuxième port intermédiaire I2 du circulateur optique 12 est connecté à une fibre optique qui dérive la lumière vers une boucle d'asservissement 20. Le but d'une telle boucle d'asservissement est d'obtenir un aplatissement spectral, c'est à dire donner une même valeur aux gains de toutes les ondes porteuses du signal multiplex. Cette valeur commune du gain est appelée généralement un "gain de platitude".

La boucle d'asservissement comporte un filtre 22 dont le but est de laisser passer seulement la lumière correspondant à une ou plusieurs longueurs d'onde se trouvant au milieu du spectre des ondes porteuses constituant le signal multiplex. La longueur d'onde choisie pourrait être par exemple 1550 nm.

La sortie du filtre 22 est transmise vers un réseau photoréfractif 24 du même type que le réseau photoréfractif 18 mentionné précédemment, mais laissant passer un faible pourcentage tel que 1% de toute la lumière reçue.

Le réseau photoréfractif 24 est suivi d'un détecteur de lumière 26 destiné à détecter la portion de lumière transmise par le réseau photoréfractif 24. Un tel détecteur de lumière peut être constitué avantageusement par une photodiode réceptrice du type à avalanche, qui fournit en sortie un signal électrique qui est fonction de la lumière reçue.

Le signal électrique fourni par le détecteur de lumière 26 est ensuite transmis à un circuit d'asservissement 28 destiné à fournir un courant asservi à une diode de pompage ou diode photoémettrice 30. Le circuit d'asservissement 28 fournit plus ou moins de courant dans la diode 30 selon que le signal électrique en provenance du détecteur de lumière 26 est inférieur ou supérieur à un seuil prédéterminé qui est fonction du gain du guide amplificateur à obtenir, c'est à dire que la valeur du courant dans la diode est fonction inverse du signal électrique provenant du détecteur de lumière 26.

Selon le courant qui la traverse, la diode de pompage 30 fournit une lumière de commande du guide amplificateur 16 constituée d'une onde de pompe agissant sur le guide amplificateur de façon connue et mentionnée précédemment. Puisque le gain du guide amplificateur dépend d'une caractéristique de l'onde de pompe, en l'occurrence la puissance de cette onde qui dépend elle-même du courant d'alimentation de la diode de pompage, le gain du guide amplificateur est maintenu constant du fait que le courant de la diode de pompage est régulé par le signal amplifié lui-même détecté par le détecteur de lumière 26. La longueur d'onde de pompe émise par la diode de pompage 30 est différente de celle des ondes porteuses du signal à amplifier et peut être par exemple de 1480 nm.

On doit noter que, dans la boucle d'asservissement 20, il importe peu que le filtre 22 soit situé en amont ou en aval du réseau photoréfractif 24 puisque chacun des deux composants agit sur des caractéristiques indépendantes du signal multiplex.

## Revendications

1. Amplificateur optique du type comportant en entrée un signal multiplex de lumière à amplifier (10) et en sortie un signal multiplex de lumière amplifié (14) par l'intermédiaire d'un guide amplificateur (16) contrôlé par une lumière de régulation provenant d'une diode de pompage (30) ; ledit amplificateur comprenant :
un circulateur optique (12) ayant un port d'entrée (E) recevant ledit signal de lumière à amplifier, un port de sortie (S) fournissant ledit signal de lumière amplifié et deux ports intermédiaires, le premier (I1) desdits ports intermédiaires étant connecté audit guide amplificateur, et
un moyen de régulation (20) dont l'entrée est connectée au second (I2) desdits ports intermédiaires et dont la sortie est connectée à ladite diode de pompage, de façon à ce que ledit guide amplificateur ait un gain égalisé pour toutes les ondes porteuses constituant ledit signal multiplex de lumière amplifié.

2. Amplificateur selon la revendication 1, dans lequel ledit guide amplificateur (16) est constitué d'une fibre optique dopée à l'erbium.

3. Amplificateur selon la revendication 1 ou 2, dans lequel ladite diode de pompage (30) fournit une onde de pompe pour exciter l'élément dopant dudit guide amplificateur (16) dont la puissance est commandée par ledit moyen de régulation en fonction inverse de la puissance du signal de lumière reçu par ledit moyen de régulation en provenance du second port intermédiaire (I2) dudit circulateur optique (12).

4. Amplificateur selon l'une des revendications 1 à 3, dans lequel la sortie dudit guide amplificateur (16) est connectée à un premier réseau photoréfractif (18) qui réfléchit 100% du signal de lumière amplifié.

5. Amplificateur selon l'une quelconque des revendications 1 à 4, dans lequel ledit moyen de régulation (20) comprend un second réseau photoréfractif (24) réfléchissant 99% de la lumière reçue.

6. Amplificateur selon la revendication 5, dans lequel ledit moyen de régulation (20) comprend un détecteur de lumière 26 connecté à la sortie dudit second réseau photoréfractif (24) pour transformer le 1% du signal de lumière non réfléchi par ledit second réseau photoréfractif (24) en un signal électrique.

7. Amplificateur selon la revendication 5 ou 6, comprenant en outre un filtre (22) destiné à ne laisser passer que la ou quelques longueurs d'onde situées au milieu du spectre du signal de lumière reçu.

8. Amplificateur selon l'une quelconque des revendications précédentes, dans lequel ledit signal à amplifier est un signal multiplex dont les longueurs d'onde sont situées dans la gamme 1550 ± 10 nm.

## Patentansprüche

1. Optischer Verstärker des Typs, der am Eingang ein zu verstärkendes Multiplex-Lichtsignal (10) und am Ausgang ein Multiplex-Lichtsignal (14) aufweist, das mittels einer Verstärkerführung (16) verstärkt wurde, die durch ein von einer Pumpdiode (30) stammendes Regelungslicht kontrolliert wird; wobei der Verstärker umfasst:
einen optischen Zirkulator (12) mit einer Eingangsöffnung (E), die das zu verstärkende Lichtsignal empfängt, einer Ausgangsöffnung (S), die das verstärkte Lichtsignal liefert, und zwei Zwischenöffnungen, wobei die erste (I1) der Zwischenöffnungen mit der Verstärkerführung verbunden ist, und
ein Regelungsmittel (20), dessen Eingang mit der zweiten (I2) der Zwischenöffnungen verbunden ist und dessen Ausgang mit der Pumpdiode verbunden ist, so dass die Verstärkerführung eine für alle Trägerwellen ausgeglichene Verstärkung hat, die das verstärkte Multiplex-Lichtsignal bilden.

2. Verstärker nach Anspruch 1, bei dem die Verstärkerführung (16) von einer mit Erbium dotierten Lichtleitfaser gebildet wird.

3. Verstärker nach Anspruch 1 oder 2, bei dem die Pumpdiode (30) eine Pumpwelle zum Anregen des dotierenden Elements der Verstärkerführung (16) liefert, deren Leistung von dem Regulierungsmittel in inverser Funktion der Leistung des Lichtsignals gesteuert wird, das von der zweiten Zwischenöffnung (I2) des optischen Zirkulators (12) stammend vom Regelungsmittel empfangen wird.

4. Verstärker nach einem der Ansprüche 1 bis 3, bei dem der Ausgang der Verstärkerführung (16) mit einem ersten lichtbrechenden Gitter (18) verbunden ist, das 100% des verstärkten Lichtsignals reflektiert.

5. Verstärker nach einem der Ansprüche 1 bis 4, bei dem das Regelungsmittel (20) ein zweites lichtbrechendes Gitter (24) umfasst, das 99% des empfangenen Lichts reflektiert.

6. Verstärker nach Anspruch 5, bei dem das Regelungsmittel (20) einen Lichtdetektor (26) umfasst, der mit dem Ausgang des zweiten lichtbrechenden Gitters (24) verbunden ist, um das vom zweiten lichtbrechenden Gitter (24) nicht reflektierte 1% des Lichtsignals in ein elektrisches Signal umzuwandeln.

7. Verstärker nach Anspruch 5 oder 6, der außerdem einen Filter (22) umfasst, der dazu bestimmt ist, nur die Wellenlänge oder Wellenlängen durchzulassen, die sich in der Mitte des Spektrums des empfangenen Lichtsignals befinden.

8. Verstärker nach einem der vorhergehenden Ansprüche, bei dem das zu verstärkende Signal ein Multiplexsignal ist, dessen Wellenlängen im Bereich 1550 ± 10 nm liegen.

## Claims

1. An optical amplifier of the type including an inlet for a multiplex light signal to be amplified (10) and an outlet for an amplified multiplex light signal (14) that has been amplified by means of an amplifying waveguide (16) that is controlled by regulation light coming from a pumping diode (30); said amplifier comprising:
an optical circulator (12) having an inlet port (E) receiving said light signal to be amplified, an outlet port (S) delivering said amplified light signal, and two intermediate ports, the first of said intermediate ports (I1) being connected to said amplifying waveguide; and
regulation means (20) having an inlet connected to the second of said intermediate ports (I2) and an outlet connected to said pumping diode, whereby said amplifying waveguide has equalized gain for all of the carrier waves constituting said amplified multiplex light signal.

2. An amplifier according to claim 1, in which said amplifying waveguide (16) is constituted by an erbium-doped optical fiber.

3. An amplifier according to claim 1 or 2, in which said pumping diode (30) delivers a pumping wave to excite the dopant of said amplifying waveguide (16) at a power which is controlled by said regulation means as an inverse function of the power of the light signal received by said regulation means and coming from the second intermediate port (I2) of said optical circulator (12).

4. An amplifier according to any one of claims 1 to 3, in which the outlet of said amplifying waveguide (16) is connected to a first photorefractive grating (18) which reflects 100% of the amplified light signal.

5. An amplifier according to any one of claims 1 to 4, in which said regulation means (20) includes a second photorefractive grating (24) reflecting 99% of the received light.

6. An amplifier according to claim 5, in which said regulation means (20) includes a light detector (26) connected to the outlet of said second photorefractive grating (24) to transform the 1% of the light signal that is not reflected by said second photorefractive grating (24) into an electrical signal.

7. An amplifier according to claim 5 or 6, further including a filter (22) designed to pass not more than a few wavelengths situated in the middle of the spectrum of the received light signal.

8. An amplifier according to any preceding claim, in which said signal to be amplified is a multiplex signal having wavelengths situated in the range 1550 ± 10 nm.
